# DEMANDE DE BREVET EUROPEEN

(11) **EP 4 742 323 A1**
(43) Date de publication de la demande: **13.05.2026**
(21) Numéro de dépôt: 25214207.0
(22) Date de dépôt: 07.11.2025
(51) Int. Cl.: H01M 4/485, H01M 10/054, C04B 35/628, H01M 4/36, H01M 4/62, C01G 23/00

(54) **PARTICULES C UR-COQUILLE METATITANATE DE SODIUM-CARBONE, LEURS PROCÉDÉS DE PRÉPARATION, ET LEURS UTILISATIONS**

(30) Priorité: 08.11.2024 FR 2412273
(71) Demandeur: Commissariat à l'Energie Atomique et aux Energies Alternatives, 75015 Paris (FR); Centre National de la Recherche Scientifique, 75016 Paris (FR); Université de Haute Alsace, 68093 Mulhouse Cedex (FR)
(72) Inventeur: ZOIZOU, Yassin, 38054 Grenoble cedex 09 (FR); SIMONIN, Loïc, 38054 Grenoble cedex 09 (FR); MATEI GHIMBEU, Camelia, 68057 Mulhouse (FR); BEDA, Adrian, 68057 Mulhouse (FR)
(74) Mandataire: Gevers & Orès

(57) **Abrégé**

La présente invention concerne des particules cœur-coquille métatitanate de sodium - carbone, leurs procédés de préparation, et leurs utilisations en tant que matériau actif d'anode de batterie sodium-ion.

## Description

La présente invention concerne des particules cœur-coquille métatitanate de sodium - carbone, leurs procédés de préparation, et leurs utilisations en tant que matériau actif d'anode de batterie sodium-ion.

Avec les préoccupations croissantes que suscite le réchauffement climatique ces dernières années, l'accent a été mis sur le passage d'énergie basées sur les combustibles fossiles à celles qui s'appuient sur des sources d'énergie renouvelables telles que le soleil et le vent. L'intermittence de ces sources entraîne un besoin inévitable de stockage de l'énergie. Dans cette nouvelle ère des ressources renouvelables, le stockage de l'énergie sous forme de batteries stationnaires est aussi important que les fermes solaires/éoliennes elles-mêmes, et leur performance en tant que système intégré détermine généralement leur succès sur le marché. Sur ce dernier point, c'est le coût de ces batteries de réseau qui est et sera encore le plus déterminant. Les batteries lithium-ion (LIB), qui constituent l'état de l'art et dépassent facilement les autres technologies de batteries traditionnelles en termes de performances, ne sont pas adaptées aux applications de réseau en raison de la disponibilité limitée des réserves de lithium. En outre, les inquiétudes concernant le prix futur du lithium, en particulier lorsque la demande augmentera à l'avenir en raison de l'escalade rapide de la demande de batteries au lithium-ion pour des applications telles que les véhicules électriques, nécessitent pour les limiter une technologie de batterie alternative qui ne dépende pas du lithium, tout en ayant des performances comparables à celles des batteries au lithium-ion.

À cet égard, les batteries sodium-ion (NIB) sont très bien adaptées puisqu'elles ont le même principe de fonctionnement que les LIB et des rapports récents suggèrent qu'elles peuvent rivaliser ou même surpasser les LIB en termes de performance. Le passage aux NIBs serait logique puisque le sodium est très abondant et qu'une technologie de batterie reposant sur le sodium serait donc beaucoup moins chère qu'une technologie reposant sur le lithium.

Les NIB, comme les LIB, nécessitent un matériau de cathode capable d'insérer/désinsérer des ions sodium à un potentiel élevé, et un matériau d'anode capable de faire de même à des potentiels faibles.

Dans ce contexte, le métatitanate de sodium (Na₂Ti₃O₇) est un matériau d'anode prometteur, car il présente plusieurs avantages significatifs pour la préparation de matériaux actifs d'anodes dans les batteries sodium-ion.

Tout d'abord, Na₂Ti₃O₇ est le matériau d'électrode d'insertion ayant le potentiel d'insertion des ions sodium le plus bas décrit, avec une région de plateau autour de 0,3 V, avec une tension de décharge moyenne dans la plage (0,01 - 2,5 V vs. Na+/Na).

Le métatitanate de sodium offre en outre une excellente stabilité chimique et thermique. Cette stabilité est cruciale pour les batteries sodium-ion, car elle permet aux anodes de fonctionner efficacement sur une large gamme de températures et de conditions chimiques, augmentant ainsi la durabilité et la fiabilité des batteries.

Ensuite, ce matériau possède une bonne capacité théorique de stockage d'ions sodium. La structure cristalline du métatitanate de sodium permet une insertion et une extraction efficaces des ions sodium, ce qui se traduit par une bonne densité d'énergie. Cela est essentiel pour améliorer l'autonomie des dispositifs alimentés par ces batteries, comme les véhicules électriques et les systèmes de stockage d'énergie renouvelable.

De plus, le métatitanate de sodium est abondant et économique. Tout d'abord, comparé au lithium, et comme indiqué plus haut, le sodium est beaucoup plus disponible dans la croûte terrestre et moins coûteux à extraire et à traiter. Cette abondance et ce faible coût peuvent réduire les coûts de production des batteries sodium-ion, rendant cette technologie plus accessible et durable. Et le métatitanate de sodium lui-même peut être synthétisé par une méthode à l'état solide facile et à grande échelle.

Enfin, le métatitanate de sodium a une haute densité (par exemple tapée) par rapport au carbone, permettant ainsi l'augmentation de la capacité volumique.

Recouvrir le métatitanate de sodium de carbone apporte des avantages supplémentaires. Les revêtements de carbone améliorent la conductivité électrique de l'anode, ce qui permet une meilleure performance globale de la batterie. De plus, le carbone peut protéger le métatitanate de sodium contre les réactions indésirables avec l'électrolyte, augmentant ainsi la stabilité et la durée de vie de l'anode. Les revêtements de carbone peuvent également améliorer la résistance mécanique de l'anode, réduisant les risques de dégradation structurelle au cours des cycles de charge et de décharge.

Cependant, le métatitanate de sodium connaît généralement une faible efficacité coulombique initiale du premier cycle et l'électrode nécessite une quantité élevée de Super P, généralement testée avec 20% de Super P, en tant qu'additif conducteur.

Outre cette faible efficacité coulombique, une telle quantité d'additif a pour effet d'augmenter la proportion de matière inactive de manière délétère, que ce soit d'un point de vue économique et industriel.

Un objectif de l'invention est ainsi la mise au point d'un matériau actif d'anode d'accumulateur sodium-ion permettant :
- une capacité initiale et une efficacité coulombique améliorées,
- une meilleure performance de cyclage, en particulier quant à l'efficacité coulombique initiale du premier cycle, et
- d'améliorer la durée de vie des batteries.

Un autre objectif de l'invention est de concevoir un tel matériau à l'aide d'un procédé robuste, répétable, permettant notamment d'obtenir la couche extérieure de l'invention de manière homogène, avec une épaisseur également homogène et contrôlable.

Encore un autre objectif de l'invention est concevoir des matériaux permettant, lorsqu'ils sont utilisés en tant que matériaux actifs d'électrode, de diminuer la quantité d'additifs, en particulier d'additifs conducteurs, permettant de diminuer la proportion de matière inactive, ce qui est avantageux d'un point de vue économique et industriel.

Ainsi, l'invention concerne une particule constituée de ou comprenant un cœur (A) constitué de ou comprenant du métatitanate de sodium, et, à son contact, une couche (B) constituée de ou comprenant du carbone, ladite particule ayant une surface spécifique inférieure à 20 m².g⁻¹.

De façon surprenante, la couche extérieure de l'invention comprenant le carbone a une telle adhérence sur le cœur de NTO que le recours aux additifs conducteurs, tel que le Super P, est fortement réduit, notamment à 5% en masse ou moins.

En outre, la nature et la construction des particules de l'invention minimise les pertes de capacité irréversibles, en particulier au cours du premier cycle.

La surface spécifique peut être mesurée par toute technique bien connue de l'homme du métier, notamment par une méthode d'analyse d'adsorption de gaz décrite par Brunauer, Emmett et Teller (BET), en utilisant par exemple le diazote comme adsorbat.

Par exemple, la surface spécifique (SSA) est déterminée avec un instrument de type Micromeritics ASAP 2420 en utilisant du N₂ en tant que gaz adsorbant (77 K). La valeur de la SSA peut être déterminée sur la base du modèle Brunauer-Emmett-Teller à partir du tracé linéaire.

La particule de l'invention peut également être appelée particule de type cœur/coquille, dans laquelle le cœur (A) est entouré d'une coquille étant la couche (B).

Selon un mode de réalisation particulier, l'invention concerne une particule comprenant un cœur (A) comprenant du métatitanate de sodium, et, à son contact, une couche (B) comprenant du carbone,
ladite particule ayant une surface spécifique inférieure à 20 m².g⁻¹.

Selon un mode de réalisation particulier, la plus grande dimension est inférieure à 15µm, en particulier inférieure à 10µm, plus particulièrement inférieure à 9, 8, 7, 6, 5, 4, 3, 2 ou 1µm.

Selon un mode de réalisation particulier, la coquille a une épaisseur comprise entre 1 et 100 nm, en particulier entre 5 et 20, 30 ou 40 nm.

Ces dimensions/épaisseurs peuvent être déterminées par exemple par microscopie électronique à transmission à haute résolution (HRTEM).

Selon un mode de réalisation particulier, la masse de carbone représente de 0,5 à 20 ou 25%, en particulier entre 1 et 10, 11, 12, 13, 14 ou 15%, en masse, par rapport à la masse totale de ladite particule.

Selon un mode de réalisation particulier, la masse de carbone représente de 1 à 20 ou 25%, en particulier de 1 à 25 %, plus particulièrement entre 1, 2, 3, 4, 5, 6, 7, 8, 9, ou 10 et 20 ou 25%, encore plus particulièrement entre 1, 2, 3, 4, 5, 6, 7, 8, 9, ou 10 et 25%, en masse, par rapport à la masse totale de ladite particule.

Selon un mode de réalisation particulier, la masse de carbone représente de 1 à 15%, en particulier entre 1, 2, 3, 4, 5, 6, 7, 8, 9, ou 10 et 15%, en masse, par rapport à la masse totale de ladite particule.

Selon un mode de réalisation particulier, la masse de carbone représente de 1 à 10, 15 ou 20% ; 2 à 10, 15 ou 20% ; 3 à 10, 15 ou 20% ; 4 à 10, 15 ou 20% ; 5 à 10, 15 ou 20% ; 6 à 10, 15 ou 20% ; 7 à 10, 15 ou 20% ; 8 à 10, 15 ou 20% ; ou 9 à 10, 15 ou 20% ; en masse, par rapport à la masse totale de ladite particule.

Pour déterminer la quantité de carbone déposé, une analyse thermogravimétrique (TGA) peut notamment être effectuée, par exemple à l'aide d'un instrument Mettler Toledo. L'échantillon est par exemple chauffé dans un creuset en alumine (Al₂O₃) sous air, de 25 à 800°C à une vitesse de chauffage de 5°C min⁻¹. La perte de masse par oxydation du carbone permet de déterminer le pourcentage en poids de carbone.

Selon un mode de réalisation particulier, le carbone est au moins partiellement organisé, par exemple sous la forme de graphène.

La présence de carbone plus ou moins organisé peut être détectée par toute technique bien connue de l'homme du métier, notamment par spectroscopie RAMAN.

Selon un mode de réalisation particulier, l'invention concerne une particule ayant une surface spécifique inférieure à 15 m².g^{-1,} notamment inférieure à 10 m².g⁻¹, en particulier inférieure à 9, 8, 7, 6, 5, 4, 3 ou 2 m².g⁻¹.

Selon un mode de réalisation particulier, la valeur de sa surface spécifique est de moins de 300% de la valeur de la surface spécifique d'une particule constituée dudit cœur, par exemple moins de 250, 200, 150, 140, 130, 120, 110, 105 ou 100%.

Selon un autre aspect, l'invention concerne également une poudre constituée de ou comprenant une pluralité de particules telles que définies précédemment.

Les modes de réalisation définis ci-dessus à propos des particules de l'invention s'appliquent également ici, seuls ou en combinaisons.

Selon un mode de réalisation particulier, la valeur de distribution granulométrique D₉₀ est inférieure à 15µm, en particulier inférieure à 10µm, plus particulièrement inférieure à 9, 8, 7, 6, 5, 4, 3, 2 ou 1µm.

La valeur de distribution granulométrique D₉₀ peut être mesurée par toute technique bien connue de l'homme du métier, par exemple par diffusion dynamique de la lumière, ou à l'aide d'un analyseur laser de particules.

Selon un autre aspect, l'invention concerne également un procédé de préparation de particules telles que définies précédemment, ou d'une poudre telle que définie précédemment, lequel comprend une étape (i) de dépôt chimique en phase vapeur (CVD) d'une couche constituée de ou comprenant du carbone sur des particules constituées de ou comprenant du métatitanate de sodium.

Les modes de réalisation définis ci-dessus à propos des particules ou une poudre de l'invention s'appliquent également ici, seuls ou en combinaisons.

Selon un mode de réalisation particulier, l'étape (i) est réalisée à une température comprise de 500 à 800°C.

Selon un mode de réalisation particulier, l'étape (i) est réalisée pendant 30 minutes à 12 heures, en particulier pendant 1 à 6 heures.

Selon un mode de réalisation particulier, l'étape (i) est réalisée à une température comprise de 500 à 800°C, pendant 30 minutes à 12 heures, en particulier pendant 1 à 6 heures, par exemple à environ 800°C pendant environ 3 heures, ou à environ 600°C pendant environ 6 heures.

Selon un mode de réalisation particulier, ladite température est atteinte après une montée en température effectuée à une vitesse comprise entre 1 et 10°C/min, de préférence d'environ 5°C/min.

Selon un mode de réalisation particulier, l'étape (i) est réalisée sous atmosphère inerte, en particulier sous argon, diazote, ammoniac, sulfure d'hydrogène ou leurs mélanges, ou sous vide.

Les gaz diazote, ammoniac, sulfure d'hydrogène et leurs mélanges sont susceptibles de permettre, si désiré, le dopage en azote et/ou soufre du carbone.

Selon un mode de réalisation particulier, l'étape (i) est réalisée en présence d'une source de carbone, en particulier d'une source gazeuse de carbone, par exemple choisie parmi l'acétylène, l'éthylène, le propylène, le méthane, et leurs mélanges.

Ladite source gazeuse est par exemple utilisée à un débit compris entre 0,1 et 3 1/heure.

Selon un mode de réalisation particulier, lesdites particules ou ladite poudre sont obtenues par synthèse hydrothermale ou par synthèse en phase solide.

Selon un autre aspect, l'invention concerne également l'utilisation de particules telles que définies précédemment, ou d'une poudre telle que définie précédemment, pour la préparation d'une anode, en particulier d'une anode d'accumulateur sodium-ion.

Selon un autre aspect, l'invention concerne également une composition d'anode, en particulier d'anode d'accumulateur sodium-ion, comprenant en tant que matériau actif des particules telles que définies précédemment, ou d'une poudre telle que définie précédemment, et comprenant en sus au moins un agent conducteur, par exemple du super P, en particulier jusqu'à 5% en masse, et/ou au moins un liant.

L'agent conducteur peut être choisi comme bien connu de l'homme du métier, notamment parmi les additifs conducteurs standards dans l'industrie des batteries lithium-ion ou sodium-ion, en particulier ceux à base de noir de carbone graphitisé. Il peut par exemple s'agir de Super P (TIMCAL graphite et carbone), le noir d'acétylène Denka (DENKA) et le noir de carbone conducteur à haute surface Ketjenblack EC300 (AkzoNobel).

Le liant peut être choisi comme bien connu de l'homme du métier, notamment parmi les liants standards dans l'industrie des batteries lithium-ion ou sodium-ion, par exemple le fluorure de polyvinilydène (PVDF), en particulier dans du N-méthylpyrrolidone (NMP).

Selon un autre aspect, l'invention concerne également un accumulateur sodium-ion comprenant une anode comprenant en tant que matériau actif des particules telles que définies précédemment ou une poudre telle que définie précédemment.

Les modes de réalisation définis ci-dessus à propos des particules ou une poudre de l'invention s'appliquent également ici, seuls ou en combinaisons.

### DEFINITIONS

Tel qu'on l'entend ici, les plages de valeur sous forme de « x-y » ou « de x à y » ou « entre x et y » incluent les bornes x et y, ainsi que les entiers et tous les nombres réels compris entre ces bornes. A titre d'exemple, « 1-5 », ou « de 1 à 5 » ou « entre 1 et 5 » désignent notamment les entiers 1, 2, 3, 4 et 5. Les modes de réalisations préférés incluent chaque entier pris individuellement dans la plage de valeur, ainsi que toute sous-combinaison de ces entiers. A titre d'exemple, les valeurs préférées pour « 1-5 » peuvent comprendre les entiers 1, 2, 3, 4, 5, 1-2, 1-3, 1-4, 1-5, 2-3, 2-4, 2-5, etc.

Tel qu'on l'utilise dans la présente description, le terme « environ » se réfère à un intervalle de valeurs de ± 10 % d'une valeur spécifique. A titre d'exemple, l'expression « environ 20 » comprend les valeurs de 20 ± 10 %, soit les valeurs de 18 à 22.

Au sens de la présente description, les pourcentages se réfèrent à des pourcentages en masse par rapport à la masse totale de la formulation, sauf indication contraire.

### FIGURES

La **figure 1** montre un cliché de l'échantillon NTO-3h-700°C obtenu par microscopie électronique à transmission à haute résolution (HRTEM).
La **figure 2** présente : (a) l'évolution de l'épaisseur du revêtement en fonction de la température pour une durée de dépôt constante de 3 heures pour NTO commercial ; (b) l'évolution de l'épaisseur du revêtement en fonction du temps de dépôt à une température fixe de 700°C pour NTO commercial.
La **figure 3** illustre les profils de charge-décharge initiales pour le premier cycle d'échantillons de NTO commerciaux non revêtus (référence hors invention) et revêtus du carbone selon la température et temps du dépôt (invention), ainsi que leur stabilité à long terme et leur efficacité coulombique sur 50 cycles ; avec : a), b) et c) pour l'effet de la température ; et d), e) et f) pour l'effet du temps de dépôt.

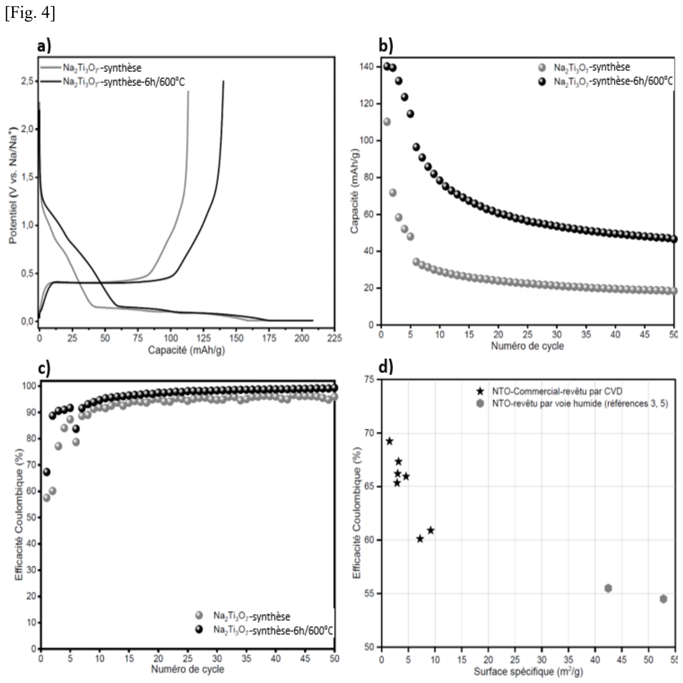

La **figure 4** présente (a) les profils de charge-décharge initiales pour le premier cycle des échantillons de NTO synthétisés (par voie solide) non revêtus (référence hors invention) et revêtus (invention), (b) leurs stabilités de cyclage à long terme correspondantes, et (c) les efficacités coulombiques jusqu'à 50 cycles, (d) les efficacités coulombiques du NTO commercial revêtu et de deux exemples de NTO tirés de la littérature ( Shiyou Li, Shuxiang, Wen, Hao Ding, Li Yang, Dongni Zhao, Ningshuang Zhang, Hong Dong, Shimin Wang, Jingjing Zhang and Jie Wang, « Improve the Electrochemical Performance of Na2Ti3O7 Nanorod through Pitch Coating », ACS Sustain. Chem. Eng., vol. 10, n° 13, p. 4247-4257, avr. 2022; J. Hwang, H. Setiadi Cahyadi, W. Chang, et J. Kim, « Uniform and ultrathin carbon-layer coated layered Na2Ti3O7 and tunnel Na2Ti6O13 hybrid with enhanced electrochemical performance for anodes in sodium ion batteries », J. Supercrit. Fluids, vol. 148, p. 116-129, juin 2019) en fonction de la surface spécifique.
La **figure 5** montre les diagrammes DRX des NTO commercial (a) et synthétisé (b) avant et après la formation du revêtement (exemple 1).

### EXEMPLES

### Exemple 1 : Synthèse et caractérisation de particules de l'invention

### Synthèse

Deux types de métatitanate de sodium (NTO) ont été utilisés dans les exemples : un NTO disponible dans le commerce (Sigma-Aldrich) et un NTO obtenu par une méthode de synthèse à l'état solide.

Pour cette synthèse de type mécano-synthèse, des masses appropriées de NaOH et de TiO₂ anatase ont été mélangées dans un broyeur à billes avec du cyclohexane comme solvant. Le mélange a été broyé pendant 4 heures à 400 tours par minute, puis séché pendant une nuit. La poudre obtenue a ensuite été calcinée à l'air à 800°C pendant 24 heures pour obtenir le produit final.

Synthèse de NTO recouvert de carbone : la poudre obtenue, qu'il s'agisse de NTO commercial ou synthétisé comme décrit ci-dessus, a été recouverte de carbone par un processus de dépôt chimique en phase vapeur (CVD). Pour ce faire, du gaz acétylène, utilisé comme précurseur du carbone, a été décomposé thermiquement dans un four horizontal ou vertical. L'échantillon a été placé dans un récipient en quartz et chauffé à une vitesse de 5°C/min jusqu'à 500, 600, 700 ou 800°C sous pression ambiante dans une atmosphère inerte d'argon. Une fois la température cible atteinte, le flux d'argon a été arrêté et de l'acétylène a été introduit dans le système à un débit de 1 L/h pendant 1, 3 ou 6 heures. Les échantillons ainsi obtenus (A partir du NTO commercial : NTO-3h-600°C, NTO-3h-700°C, NTO-6h-600°C, NTO-6h-700°C et NTO-3h-800°C; à partir du NTO synthétisé : NTO-synthétisé-6h-600°C) ont ensuite été refroidis à température ambiante sous argon.

### Caractérisation des matériaux obtenus : modes opératoires

Pour déterminer la quantité de carbone déposé, une analyse thermogravimétrique (TGA) a été effectuée à l'aide d'un instrument Mettler Toledo. L'échantillon a été chauffé dans un creuset en alumine (Al₂O₃) sous air, de 25 à 800°C à une vitesse de chauffage de 5°C min⁻¹. La perte de masse par oxydation du carbone permet de déterminer le pourcentage en poids de carbone.

La structure cristalline des matériaux a été analysée par diffraction des rayons X (DRX) sur un diffractomètre Bruker D8 ADVANCE A25 géométrie thêta/thêta (rayon goniomètre: 280mm), équipé d'un détecteur 1D à haute résolution LYNXEYE XE-T à discrimination d'énergie (<380eV, Cu Kα1,2) et fonctionnant avec une source de rayons X Cu Kα1,2. Un couteau anti diffusion motorisé pour une suppression efficace de la diffusion de l'air à bas angle est présent. Les échantillons sont préparés en porte-échantillon standard en poly(méthacrylate de méthyle) - (PMMA) en réalisant une pyramide de poudre qui est aplatie à l'aide d'une lame de verre. Les conditions d'acquisition ont été les suivantes: domaine angulaire 10-90°2theta, pas de comptage: 0,01°, temps de comptage par pas:0,5s. Le temps total d'acquisition se monte à 1h08. Lors de cette acquisition, l'échantillon est en mis en rotation à 5trs/mn. Le logiciel DIFFRAC.SUITE, DIFFRAC.EVA assure l'exploitation des diffractogrammes et le calcul de la distance interréticulaire d(hkl) (distance entre deux plans consécutifs de mêmes indices (hkl)) est obtenue par simple application de la loi de Bragg (2d(hkl) sinθ= nλ) ou n est un entier (dans le cas de ce travail, n=1), λ est la longueur d'onde, et θ l'angle d'incidence du faisceau de rayons X sur le plan en condition de diffraction d'indice (hkl).

Les diagrammes XRD ont été enregistrés dans une plage de 2θ de 8° à 80°. La morphologie, la structure et l'épaisseur de la couche de revêtement comprenant le carbone a été déterminée à l'aide d'un microscope électronique à transmission à haute résolution (HRTEM) et par spectroscopie de rayons X à dispersion d'énergie (EDX) dans trois zones distinctes des matériaux, avec un instrument JEOL (modèle ARM-200F) fonctionnant à 200 kV.

La surface spécifique (SSA) et la distribution de la taille des pores ont été déterminées avec un instrument de type Micromeritics ASAP 2420 en utilisant du N₂ en tant que gaz adsorbant (77 K). La valeur de la SSA a été déterminée sur la base du modèle Brunauer-Emmett-Teller à partir du tracé linéaire.

Avant l'analyse, les matériaux ont été dégazés à 300°C pour 12h sous vide sur la porte de dégazage pour éliminer les molécules d'eau et un second dégazage a été ensuite effectué pour 2h supplémentaire sur la porte d'analyse pour éliminer le gaz de remplissage. Une masse comprise entre 150 et 300 mg a été employés. La surface spécifique BET (Brunauer, Emmett and Teller) a été calculée dans l'intervalle de pression relative de 0,05-0,3.

### Résultats

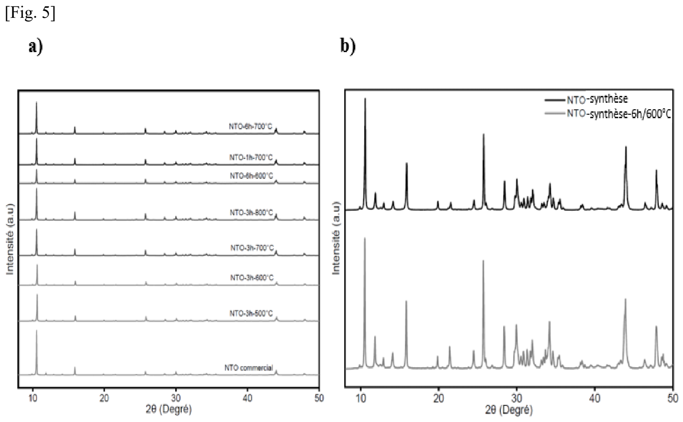

Les analyses DRX de tous les échantillons décrits ci-dessus ont été effectuées. Les diagrammes DRX des NTO commerciaux et synthétisés montrent que la structure cristallographique principale n'a pas été influencée par le revêtement de carbone, et tous les échantillons présentent les mêmes pics de Bragg avant et après la formation du revêtement (**figure 5**).

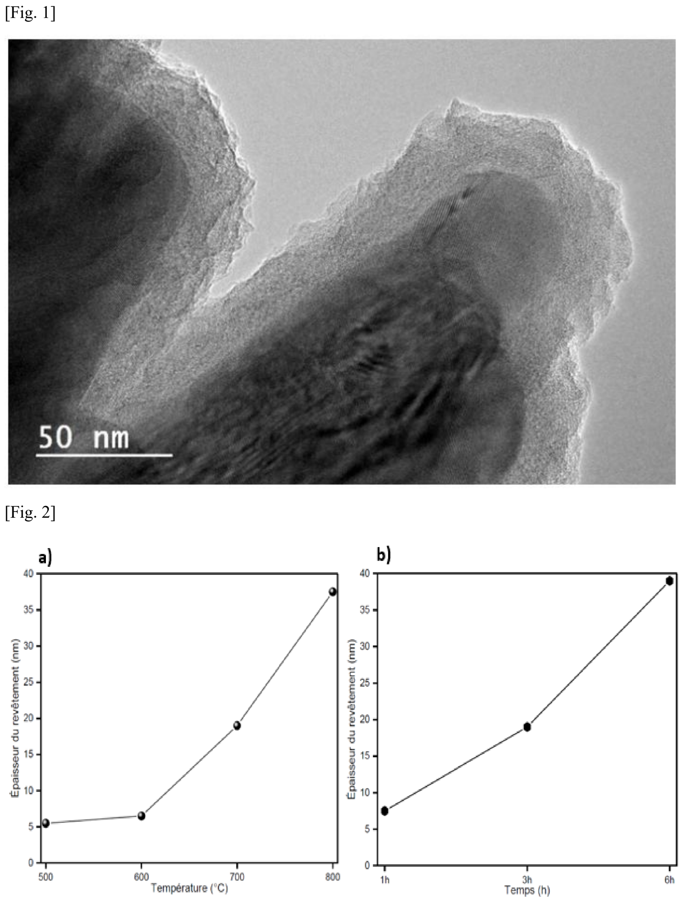

Le HRTEM a été utilisé pour analyser la couche de carbone, des résultats étant présentés à la **figure 1****.** Les images obtenues, notamment celle de la figure 1, révèlent une distribution homogène de la couche de carbone autour des particules, avec des épaisseurs observées dans différentes conditions, comme suit : 5,5 nm pour l'échantillon revêtu pendant 3 h à 500°C, 6,5 nm pour l'échantillon revêtu pendant 3 h à 600°C, 12 nm pour l'échantillon revêtu pendant 6 h à 600°C, 7,5 nm pour l'échantillon revêtu pendant 1h à 700°C, 19 nm pour l'échantillon revêtu pendant 3 h à 700°C, et 39 nm pour l'échantillon revêtu pendant 6 h à 700°C, et enfin 37,5 nm pour l'échantillon revêtu pendant 3h à 800°C.

Le NTO synthétisé revêtu à 600°C pendant 6h à une épaisseur de 17nm.

L'évolution de l'épaisseur du revêtement carboné en fonction de la température et du temps de dépôt est illustrée à la **figure 2****.** Cette épaisseur augmente avec le temps, ainsi qu'avec la température.

Une analyse thermogravimétrique (ATG) a été réalisée sous air, de 25°C à 800°C, afin de déterminer la quantité de carbone déposée. Les matériaux revêtus de NTO commercial ou de synthèse ont été analysés. La perte de masse mesurée entre 400°C et 600°C correspond à l'oxydation de la couche de carbone sur les échantillons revêtus, et permet donc de quantifier la quantité de carbone déposée (entre 1.5 et 12.1 wt.%), comme reporté dans le **tableau 1** suivant :

**Tableau 1**

| | NTO-3h-500°C | NTO-3h-600°C | NTO-3h-700°C | NTO-3h-800°C | NTO-6h-600°C | NTO-1h-700°C | NTO-6h-700°C | NTO-synthèse-6h-600°C |
|---|---|---|---|---|---|---|---|---|
| Carbone déposé (%) | 1,5 | 4,2 | 6,6 | 12,7 | 8,2 | 2,7 | 12,1 | 5,5 |

Les isothermes d'adsorption-désorption de N₂ ont été déterminées pour tous les matériaux décrits ci-dessus. Comme le montre le **tableau 2,** le NTO commercial a montré une augmentation de la surface BET pour les échantillons revêtus à 500°C (pendant 3 heures) ou 600°C (et ce, pendant 3 ou 6 heures), passant de 3,1 m²/g à 4,6 m²/g, 7,2 m²/g et 9,2 m²/g, respectivement. Pour les échantillons revêtus à 700°C, et ce, pendant 1h, 3h ou 6h, la surface BET est restée plus ou moins constante. Une diminution de la valeur BET SSA a été observée pour l'échantillon revêtu pendant 3h à 800°C. En outre, le NTO synthétisé a présenté une légère augmentation de la surface spécifique (SSA) après le revêtement, de 4,2 m²/g à 5,3 m²/g.

**Tableau 2**

| | NTO commercial (référence hors invention) | NTO-3h-500°C (inv.) | NTO-3h-600°C (inv.) | NTO-6h-600°C (inv.) | NTO-1h-700°C (inv.) | NTO-3h-700°C (inv.) | NTO-6h-700°C (inv.) | NTO-3h-800°C (inv.) | NTO-synthèse (référence hors invention) | NTO-synthèse-6h-600°C (inv.) |
|---|---|---|---|---|---|---|---|---|---|---|
| Surface BET (m²/g) | 3,1 | 4,6 | 7,2 | 9,2 | 3,2 | 3,1 | 2,9 | 1,5 | 4,2 | 5,3 |

### Exemple 2 : Caractérisations électrochimiques

### Protocoles

Pour tester les performances électrochimiques des matériaux de l'invention, des électrodes ont été préparées avec ces matériaux en tant que matériau actif.

Pour ce faire, une suspension contenant 90 % de matière active, 5 % d'additif conducteur Super P et une solution de 5 % de fluorure de polyvinilydène (PVDF) dans du N-méthylpyrrolidone (NMP), en tant que liant a été préparée. Cette suspension épaisse a ensuite été recouverte sur une feuille d'aluminium et séchée à 55°C pendant la nuit. Des électrodes de 14 mm de diamètre ont été découpées dans la feuille d'aluminium. Une pile bouton a été assemblée dans une boîte à gants sous atmosphère d'argon, en utilisant du sodium métallique comme électrode de référence et de contre-électrode. Une membrane CELGARD^{®} 2400 a été utilisée comme séparateur, et une membrane VILEDON^{®} a été utilisée pour l'accessibilité à l'électrolyte. L'électrolyte utilisé est une préparation composée d'une solution de NaPF₆ 1 M dans un volume 1:1 de carbonate d'éthylène (EC) avec du carbonate de di-méthyle (DMC) avec ajout de 2 % en poids de carbonate de fluoroéthylène (FEC).

Les piles bouton ainsi obtenues ont été testées dans le cadre d'un essai de cyclage galvanostatique à l'aide d'une installation d'Arbin Instruments fonctionnant avec le logiciel MITS PRO. Les piles bouton ont été cyclées à C/10 pendant les cinq premiers cycles, puis à 1C pour le reste du cycle. À la fin de chaque décharge, la cellule a été réglée sur une étape de flottement à une tension constante de 10mV. Les cycles de charge et de décharge se déroulent entre 0,01 et 2,5 V par rapport à Na⁺/Na. 3 cellules ont été testées pour chaque échantillon.

### Résultats

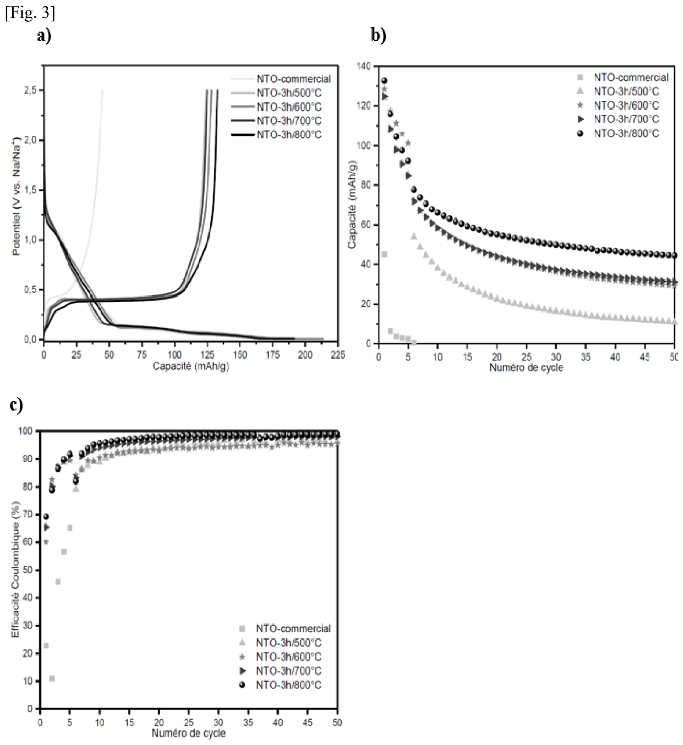

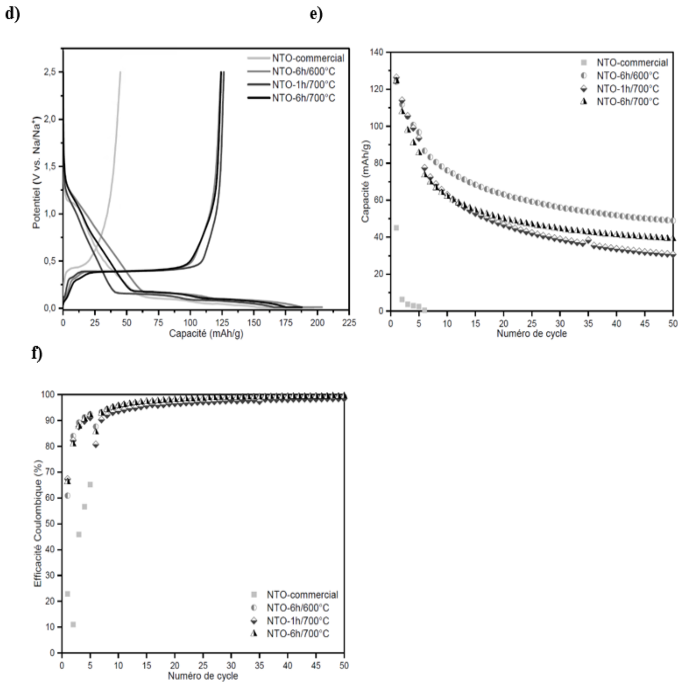

Les performances électrochimiques des échantillons de NTO revêtus (invention) et non revêtus (références hors invention) sont présentées dans les **figures 3** **et** **4****.** Les profils de charge-décharge du NTO commercial revêtu et non revêtu sont présentés à la **figure 3****,** ainsi que la stabilité à long terme et l'efficacité coulombique sur 50 cycles. Le NTO commercial vierge présente des performances électrochimiques médiocres, avec une capacité initiale d'environ 45 mAh.g⁻¹ au cours du premier cycle et une faible efficacité coulombique de 23 %. Après seulement cinq cycles, la capacité chute à près de 0 mAh.g⁻¹, probablement en raison d'une mauvaise conductivité électronique. En revanche, le NTO commercial revêtu de l'invention présente une amélioration significative de la capacité initiale, allant de 124 à 128 mAh.g⁻¹, avec une efficacité coulombique comprise entre 60 et 66 %. Le revêtement améliore également la stabilité du cycle à long terme.

Pour le NTO synthétisé (**figure 4**), le matériau non revêtu est plus performant que le matériau commercial de référence (vierge), avec une capacité initiale d'environ 110 mAh.g⁻¹ et une efficacité coulombique de 58 %. Après revêtement, la capacité initiale augmente de 110 à 141 mAh.g⁻¹, avec une efficacité coulombique de 67 %, et présente une meilleure stabilité sur 50 cycles par rapport au NTO synthétisé non revêtu. Sans vouloir se restreindre à une quelconque théorie, ces résultats indiquent que le revêtement de carbone à la surface du NTO empêche efficacement le contact direct entre l'électrode et l'électrolyte, atténuant ainsi la décomposition rapide de l'électrolyte et améliorant la performance électrochimique globale du NTO. La conductivité électronique du carbone améliore aussi la percolation des électrons, contribuant à une meilleure rétention de la capacité.

En outre, le procédé de l'invention permet de maintenir une surface spécifique significativement faible tout en améliorant l'efficacité coulombique initiale par rapport à la littérature, comme le montre la **figure 4(d)****,** soulignant le rôle important de la surface spécifique dans la optimisation de l'efficacité coulombique initiale.

## Revendications

1. Particule constituée de ou comprenant un cœur (A) constitué de ou comprenant du métatitanate de sodium, et, à son contact, une couche (B) constituée de ou comprenant du carbone, ladite particule ayant une surface spécifique inférieure à 20 m².g⁻¹,
la masse de carbone représentant de 1 à 25% en masse, par rapport à la masse totale de ladite particule

2. Particule selon la revendication 1, dont la plus grande dimension est inférieure à 15µm, en particulier inférieure à 10µm, plus particulièrement inférieure à 9, 8, 7, 6, 5, 4, 3, 2 ou 1µm.

3. Particule selon l'une quelconque des revendications précédentes, dans laquelle :
- la coquille a une épaisseur comprise entre 1 et 100 nm, en particulier entre 5 et 20, 30 ou 40 nm ; et/ou
- la masse de carbone représente entre 1 et 10, 11, 12, 13, 14 ou 15%, en masse, par rapport à la masse totale de ladite particule.

4. Particule selon l'une quelconque des revendications précédentes, ayant une surface spécifique inférieure à 15 m².g⁻¹, notamment inférieure à 10 m².g⁻¹, en particulier inférieure à 9, 8, 7, 6, 5, 4, 3 ou 2 m².g⁻¹.

5. Procédé de préparation de particules selon l'une quelconque des revendications 1 à 4, lequel comprend une étape (i) de dépôt chimique en phase vapeur (CVD) d'une couche constituée de ou comprenant du carbone sur des particules constituées de ou comprenant du métatitanate de sodium.

6. Procédé selon la revendication 5, dans lequel l'étape (i) est réalisée à une température comprise de 500 à 800°C, et/ou pendant 30 minutes à 12 heures, en particulier pendant 1 à 6 heures.

7. Procédé selon l'une quelconque des revendications 5 à 6, dans lequel l'étape (i) est réalisée sous atmosphère inerte, en particulier sous argon, diazote, ammoniac, sulfure d'hydrogène ou leurs mélanges, ou sous vide.

8. Procédé selon l'une quelconque des revendications 5 à 7, dans lequel l'étape (i) est réalisée en présence d'une source de carbone, en particulier d'une source gazeuse de carbone, par exemple choisie parmi l'acétylène, l'éthylène, le propylène, le méthane, et leurs mélanges.

9. Procédé selon l'une quelconque des revendications 5 à 8, dans lequel lesdites particules ou ladite poudre sont obtenues par synthèse hydrothermale ou par synthèse en phase solide.

10. Utilisation de particules selon l'une quelconque des revendications 1 à 4 pour la préparation d'une anode, en particulier d'une anode d'accumulateur sodium-ion.

11. Composition d'anode, en particulier d'anode d'accumulateur sodium-ion, comprenant en tant que matériau actif des particules selon l'une quelconque des revendications 1 à 4, et comprenant en sus au moins un agent conducteur, en particulier jusqu'à 5% en masse, et/ou au moins un liant.

12. Accumulateur sodium-ion comprenant une anode comprenant en tant que matériau actif des particules selon l'une quelconque des revendications 1 à 4.
